# EUROPÄISCHE PATENTANMELDUNG

(11) **EP 1 736 732 A1**
(43) Veröffentlichungstag der Anmeldung: **27.12.2006**
(21) Anmeldenummer: 05013249.7
(22) Anmeldetag: 20.06.2005
(51) Int. Cl.: G01C 15/00

(54) **Verfahren zum Horizontieren eines Messgeräts und Messgerät mit einer Horizontiereinrichtung**

(71) Anmelder: Leica Geosystems AG, 9435 Heerbrugg (CH)
(72) Erfinder: Schorr, Christian, 9443 Widnau (CH)
(74) Vertreter: Kaminski, Susanne

(57) **Zusammenfassung**

Bei einem erfindungsgemässen Verfahren zur Horizontierung eines Messgeräts, wie eines Tachymeters oder eines Theodolits, wird nach Aufstellen des Geräts an einem Aufstellpunkt in einem ersten Schritt anhand wenigstens eines Messmittels die aktuelle horizontale Ausrichtung des Messgeräts festgestellt. Ein solches Messmittel ist beispielsweise eine Libelle oder ein Neigungskompensator. Mittels einer Datenverarbeitungseinrichtung, wie einem Mikroprozessor, werden die verfügbaren Ausrichtungs-Werte dann in Verstell-Anweisungen für verstellbare Justiermittel zur Höhenverstellung des Messgeräts verarbeitet. Die Justiermittel sind beispielsweise Fussschrauben (6a,6b,6c), welche entsprechend den Verstell-Anweisungen gedreht werden.

## Beschreibung

Die Erfindung betrifft ein Verfahren zum Horizontieren eines, insbesondere geodätischen, Messgeräts nach Anspruch 1, ein Messgerät nach Anspruch 5, sowie ein Computerprogrammprodukt nach Anspruch 13.

Geodätische Messgerate werden im Allgemeinen im Gelände aufgestellt und eingesetzt. Für die Messungen werden robuste, aber präzise Geräte und Befestigungseinrichtungen/Stative benötigt. Für viele Anwendungen - gerade in der Vermessung - liegen die erforderlichen Messgenauigkeiten im Millimeter- und Winkelsekunden-Bereich. Derartige Präzisionsmessungen erfordern entsprechende Messvorbereitungen, dazu zählt das fachgerechte Auf- und Einstellen der Instrumente. Nach Aufstellen der Geräte im Gelände - im Allgemeinen auf einem zweckentsprechenden Stativ - werden die Geräte im Rahmen des Einstellvorgangs horizontal ausgerichtet. Die Horizontierung erfolgt dabei z.B. mit Libellen, wie Dosenlibellen zur Grob-, und Röhrenlibellen oder elektronischen Libellen zur Feinhorizontierung. Einstellschrauben am Instrument werden so lange gedreht, bis die Libellenblasen jeweils in der Mitte der Libellenanzeige einspielen. Für die Drehung der Schrauben gilt bei fachgerechter Konstruktion derselben die sogenannte Daumen-Zeigefinger-Regel: beim Drehen läuft die Blase in der Drehrichtung des Daumens der linken und des Zeigefingers der rechten Hand. Beim Drehen von zwei Schrauben gleichzeitig hat man daher stets gegenläufig zu drehen.

Weiters wird das Instrument über einem Aufstellpunkt zentriert, z.B. mittels Senkblei, optischem Lot oder mittels eines Laserlots - ein Laser des Geräts emittiert vertikal nach unten aus dem Gerät Laserstrahlung, z.B. durch eine hohle Anzugschraube oder eine andere Öffnung. Das Gerät wird so lange verschoben, bis das Lot der Stehachse des Instruments - das Zentrum der Winkelmessung für ein Winkel-Messgerät - genau auf den Aufstellpunkt fällt. Nach dem Zentrieren muss dann das - im Allgemeinen durch den Zentriervorgang wieder etwas aus der horizontalen Lage gebrachte - Gerät bzgl. der Horizontierung nochmals nachjustiert werden.

Insgesamt kann sich diese Lage-Einstellung eines Instruments als sehr (zeit-)aufwändig gestalten, besonders wenn sie kein geübter Anwender, sondern jemand, der derartige Messgeräte nur selten oder überhaupt zum ersten Mal bedient, durchführt.

Die Aufgabe der Erfindung ist die Bereitstellung eines Verfahrens zur Horizontierung eines, insbesondere geodätischen, Messgeräts, sowie die Bereitstellung eines solchen Messgeräts, welche die Horizontierung des Geräts für einen, insbesondere auch ungeübten, Anwender erleichtern.

Eine weitere Aufgabe ist die Bereitstellung eines Computerprogrammprodukts für das erfindungsgemässe Verfahren.

Diese Aufgaben werden durch die Verwirklichung der kennzeichnenden Merkmale der Ansprüche 1, 5 und 13, sowie durch die kennzeichnenden Merkmale der Unteransprüche gelöst bzw. die Lösungen weitergebildet.

Bei einem erfindungsgemässen Verfahren zur Horizontierung (Lotrechtstellung) eines Messgeräts, wie eines Tachymeters oder Theodolits, wird nach Aufstellen des Geräts an einem Aufstellpunkt in einem ersten Schritt anhand wenigstens eines Messmittels die aktuelle horizontale Ausrichtung des Messgeräts festgestellt. Ein solches Messmittel ist beispielsweise eine Libelle oder ein Neigungskompensator. Mittels einer Datenverarbeitungseinrichtung, wie einem Mikroprozessor oder Notebook, werden die verfügbaren Ausrichtungs-Werte dann in Verstell-Anweisungen der Justiermittel, wie Fussschrauben, des Messgeräts verarbeitet.

Die Erfindung wird im Folgenden hauptsächlich unter Bezugnahme auf geodätische Anwendungen und Geräte beschrieben. Unter "geodätischem Messgerät" soll ein Messinstrument verstanden werden, das über Vorrichtungen zur Messung oder Überprüfung von Daten mit räumlichem Bezug verfügt. Insbesondere betrifft dies die Messung von Entfernung und/oder Richtung bzw. Winkeln zu einem Bezugs-oder Messpunkt. Darüber hinaus können jedoch noch weitere Vorrichtungen, z.B. Komponenten zur satellitengestützten Ortsbestimmung (bspw. GPS, GLONASS oder GALILEO), vorhanden sein, die für ergänzende Messungen oder Datenaufnahmen verwendet werden können. Insbesondere sollen hier unter einem solchen geodätischen Messgerät Theodoliten und auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung; diese Systeme werden hiermit ebenfalls unter dem Begriff "geodätisches Messgerät" erfasst. Weiters ist selbstverständlich, dass die Erfindung auf alle Arten horizontierbarer Messgeräte anwcndbar ist.

Als Horizontieren eines Instruments wird das Vertikal- oder Horizontalstellen von Instrumentenachsen in Bezug auf die Horizontalebene (Ebene senkrecht zur Lotlinie) bezeichnet. Im Allgemeinen wird die Achse senkrecht auf die Horizontalebene als Stehachse des Geräts bezeichnet, als Ziel- und Kippachse werden zwei senkrecht aufeinander stehende Achsen (sogenannte Hauptachsen) in der Horizontaleberle (in die Richtungen der die Ebene aufspannenden Vektoren zeigend) festgelegt. Ein Feststellen der horizontalen Lage des Messgeräts umfasst auch ein Erfassen der Abweichung aus der Horizontal-Lage, insbesondere ein erfassen der Richtung der Abweichung aus der Horizontal-Lage oder ein Bestimmen von Richtung und Grösse der Abweichung. Um die. Abweichung aus der Horizontalebene zu bestimmen, werden zwei Ausrichtungs-Werte (bezüglich der zwei die Ebene definierenden Richtungen) bestimmt, welche Werte an eine Datenverarbeitungseinrichtung weitergegeben und - mittels einer entsprechenden Software - verarbeitet werden. Die Bezeichnung "Wert" umfasst nicht nur Daten-Werte/Zahlen-Werte, die Werte können als konkrete Messwerte, wie Winkelmesswerte/Neigungsmesswerte, übergeben werden, oder auch als Angaben, wie "zu weit links/rechts", etc.

Die Datenverarbeitungseinrichtung ist im Allgemeinen in das Messgerät integriert, z.B. als interner Mikroprozessor, kann aber auch als externe Einheit mit dem Messgerät kommunizieren. Die Übertragung der Werte kann kabellos, beispielsweise über Funk oder Bluetooth, oder über eine Kabelverbindung erfolgen.

In der Datenverarbeitungseinrichtung werden die Ausrichtungs-Werte verarbeitet und können dann als Anweisungen/Kommandos für einen Anwender, der das Gerät justiert, ausgegeben werden. Die Anweisungen sind dabei Verstell-Anweisungen für Justiermittel des Gerätes, beispielsweise in der Form von Angaben der Verstellrichtung oder Verstellrichtung und -grösse.

Vorteilhaft erfolgt eine Wiedergabe der Verstell-Anweisungen anhand von Wiedergabemitteln, beispielsweise optisch oder akustisch. Die Bezeichnung Wiedergabemittel umfasst auch die zur Wiedergabe erforderliche Elektronik. Weiter können Wiedergabemittel eine Anzeige, wie ein graphisches Display, Darstellungsmittel zur Anzeige/Angabe von Daten und/oder Anweisungen und/oder Darstellung von Zeichen, etc. umfassen.

Bei auf einer Anzeige, wie einem graphischen Display, wiedergegebenen Verstell-Anweisungen können die Anweisungen als Pfeile dargestellt werden. Die Pfeile - als Darstellungsmittel - zeigen die Verstellrichtung, wie Drehrichtung, der Justiermittal an, auch ist die Grösse der Verstellung - z.B. anhand von Breite und Länge der Pfeile - darstellbar. Je nach Art der Justiermittel können auch konkrete Verstell-Werte in Form von Zahlenangaben angezeigt werden.

Eine Weiterentwicklung der Erfindung sieht - bei entsprechend ausgebildeten Justiermitteln - die automatisierte Verstellung der Justiermittel, und damit auch automatisierte Horizontierung des Messgeräts vor. Dazu ergehen beispielsweise die verstellanweisungen - direkt oder indirekt - an Steuereinrichtungen, wie Stellmotoren, des Justiermittels bzw. der Justiermittel.

Als Justiermittel weist ein Messgerät im Allgemeinen Schrauben, dabei meist drei sogenannte Horizontier- oder Fussschrauben, auf. Es sind auch Geräte mit zwei oder vier Justierschrauben bekannt, aus praktischen Gründen weisen die meisten Geräte aber drei Schrauben auf. Mittels der Schrauben ist das Gerät - z.B. an drei Punkten - höhenverstellbar, und so horizontierbar. Bei einem Gelenk, wie einem Kugelgelenk, als Justiermittel erfolgt die Horizontierung des Messgeräts in den beiden die Horizontalebene definierenden Achsen vergleichbar der Horizontierung mittels zwei Fussschrauben. Für eine solche Horizontierung mittels eines einzigen Justiermittels werden beispielsweise Stative mit Kugelkopf oder Stativköpfe mit seitlichen Kugelzonen eingesetzt.

Ist als Messmittel eine Röhren-Libelle eingesetzt (bzw. auch bei nachgebildeter Libellen-Anzeige), wird das Messgerät so gedreht, dass die Libelle parallel zu zwei der Schrauben steht, die Libellenblase wird dann mittels der Schrauben in die Mitte der Röhre eingespielt. Je nach Art der Messmittel (und Justiermittel) dreht man dann das Instrument um 90° und dreht - z.B. - die dritte Schraube. Durch das Drehen um 90° wird eine Neigung des Instruments in der ersten Hauptachse unabhängig von einer Neigung in der dazu senkrechten zweiten Hauptachse der Horizontalebene. Das Drehen entfällt, wenn die Messmittel, wie zwei senkrecht aufeinander stehende Röhrenlibellen, bereits das Ablesen der Neigungen in diesen Raumrichtungen zulassen.

Beim Vorhandensein einer Dosenlibelle kann man die drei Schrauben drehen, bis die Libellenblase in der Mitte einspielt - diese Art der Einstellung ist aber für die meisten Anwendungen zu ungenau und wird oft nur zur Grobhorizontierung verwendet.

Heute sind jedoch im Allgemeinen elektronische Libellen eingesetzt bzw. weisen die Geräte Neigungskompensatoren auf. Durch die Neigungskompensatoren werden Abweichungen der instrumentellen Horizontal- und Vertikalachsen von den durch die Schwerkraft definierten Richtungen ausgeglichen. Ausserdem können sie zur Korrektur von durch schiefe Stehachsen verfälschten Messungen eingesetzt werden. Werden Neigungen der Stehachse in Zielrichtung und der dazu rechtwinkligen Richtung (Richtung der Kippachse) mittels eines _ Zweiachs-Kompensators bestimmt, sind die beobachteten/gemessenen Horizontalrichtungen und Vertikalwinkel rechnerisch korrigierbar. Als Neigungskompensatoren sind Flüssigkeits- und Pendelsysteme bekannt. Heutzutage werden Neigungskompensatoren meist nicht nur zur Kompensation der aktuellen Schiefstellung der Stchachse, sondern auch - insbesondere anstelle von Röhrenlibellen - zum Horizontieren des Instruments genutzt. Im Allgemeinen wird dann zum Einstellen des Geräts der Anschaulichkeit halber auf einer Anzeige die Dosen- bzw. Röhrenlibelle graphisch nachgebildet.

Ein erfindungsgemässes Messgerät, welches mittels des obengenannten Verfahrens horizontierbar ist, weist dementsprechend wenigstens ein Messmittel, wenigstens ein, insbesondere drei, verstellbares Justiermittel, eine Datenverabeitungseinrichtung und gegebenenfalls wiedergabemittel auf, wobei die einzelnen Komponenten jeweils die zur Durchführung des Verfahrens erforderlichen Funktionen aufweisen. So wird mit wenigstens einem Messmittel, wie einer Dosenlibelle, Röhrenlibelle, elektronischen Libelle oder einem Neigungskompensator, die horizontale Ausrichtung, insbesondere die genaue Abweichung von der Horizontallage, des Geräts festgestellt. Die Ausrichtungswerte werden in der Datenverarbeitungseinrichtung, wie einem Mikroprozessor, in Verstell-Anweisungen des Justiermittels bzw. der Justiermittel verarbeitet. Über Wiedergabemittel können die Anweisungen dem Benutzer zugänglich gemacht werden. In einer Ausführungsform erfolgt eine Wiedergabe der Anweisungen auf einem dem Messinstrument zugeordneten graphischen Display. Vorteilhaft sind auf dem Display ausserdem die Ausrichtungs-Angaben - z.B. mittels nachgebildeter Libellen-Anzeigen - und zusätzlich die dementsprechenden Verstellrichtungen der Justiermittel, wie Stellschrauben, ablesbar.

So sind in einer Ausführungsform der Erfindung eine Dosenlibellen-Anzeige und zwei aufeinander senkrechte Röhrenlibellen-Anzeigen auf einem graphischen Display am Messgerät abgebildet. Der Benutzer sieht so die aktuelle Horizontallage des Instruments bezogen auf die Horizontalebene. Drei Fussschrauben des Instrumentenunterteils sind ebenfalls auf dem Display nachgebildet. Es versteht sich, dass ebenso - je nach Ausführungsform - eine Anordnung von einem (wie einem Kugelgelenk), zwei oder mehr Justiermitteln abgebildet werden kann. Dazu sind die mittels einer Software der Datenverarbeitungseinrichtung generierten Verstell-Drehrichtungen der Fussschrauben durch Pfeile angezeigt. So kann ein Anwender der Anzeige entnehmen, welche Schraube er in welche Richtung zu drehen hat - damit wird das Dejustieren des Geräts durch versehentlichea falsches Drehen vermieden. Sind die Schrauben in korrekter Stellung, erscheint eine entsprechende Meldung auf dem Display. Sind alle Schrauben richtig gestellt und das Gerät damit horizontiert, so können Messungen durchgeführt werden. Will der Benutzer mit einem nicht-horizontierten Gerät messen, erscheint auf dem Display eine Fehlermeldung, beispielsweise die Meldung "Gerät nicht horizontiert".

In einer weiteren Ausführungsform ist das bzw. sind die Justiermittel, z.B. die Fussschrauben, automatisch verstellbar ausgebildet. Werden die Fussschrauben des Geräts motorbetrieben, so ist das Instrument automatisch horizontierbar, indem die als Schrauben ausgebildeten Justiermittel generierten Verstell-Anweisungen entsprechend automatisch verstellt werden. Auch bei einem Gelenk als Justiermittel kann das Gerät so ausgebildet werden, dass es sich anhand entsprechender Steuerbefehle selbst horizontiert. Einstellfehler durch einen Anwender entfallen somit. Auch ist die automatische Einstellung präzise und schnell durchführbar und kann z.B. einfach durch Knopfdruck - oder über eine Fernbedienung - wiederholt werden. Es ist selbstverständlich, dass die Justiermittel nicht als Fussschrauben ausgebildet sein müssen, sondern auch in einer anderen Ausbildung automatisch verstellbar ausführbar sind.

In einer weiteren Ausführungsform ist das Gerät automatisch zentrierbar. So wird beispielsweise die automatische Zielerkennungs-Funktion, die z.B. von motorisierten Tachymetern bekannt ist, zum Zentrieren des Instruments über dem Aufstellpunkt eingesetzt. Im Stand der Technik wird das Instrument meist mittels eines Laserlots oder eines Zentrierstocks zentriert. Das Laserlot umfasst einen Laser, welcher Laserstrahlung in Vertikal-Richtung aus dem Instrument abgibt. Das Instrument wird so lange verschoben, bis der Laserstrahl den Aufstellpunkt genau trifft. Bei der Zentrierung wird das Gerät dann oft so verschoben, dass die Horizontierung erneut durchgeführt werden muss, wobei das Gerät bzgl. der Zentrums-stellung wieder dejustiert werden kann. Erfindungsgemäss ist vorgesehen, diesen Nachteil durch eine automatische Zentrier-Funktion, insbesondere in Verbindung mit der oben genannten automatischen Horizontier-Funktion, des Geräts zu überwinden. So wird beispielsweise auf den Aufstellpunkt Reflexfolie aufgeklebt und das Gerät so ausgebildet, dass der Punkt mittels einer ATR-Funktion automatisch gesucht und erkannt wird. Das Instrument kann dabei auf Schienen oder einer Schiebeplatte verschoben werden, im Allgemeinen auf einem Stativ-Kopf. Iteratives Ausführen des automatischen Zentrier- und Horizontiervorgangs führen schliesslich dazu, dass das Gerät horizontal ausgerichtet zentrisch über dem Aufstellpunkt positioniert ist.

Das erfindungsgemässe Verfahren, sowie ein erfindungsgemässes Messgerät werden nachfolgend anhand von in den Zeichnungen schematisch dargestellten Ausführungsbeispielen rein beispielhaft näher beschrieben. Im Einzelnen zeigen
- Fig. 1A: ein Tachymeter mit Fussschrauben als Justiermittel zum Horizontieren des Tachymeters und graphischem Display zur graphischen Wiedergabe von Verstell-Anweisungen;
- Fig. 1B: das auf einem Stativ befestigte Tachymeter aus Figur 1A mit automatischer Zielerkennungs-Funktion zum Zentrieren über einem Aufstellpunkt;
- Fig. 2: die graphische Wiedergabe von Ausrichtungs-Werten und Verstell-Anweisungen auf einem graphischen Display eines Messgeräts;
- Fig. 3A - 3D: die graphische Darstellung von Verstell-Anweisungen eines erfindungsgemassen Verfahrens beim Horizontieren.

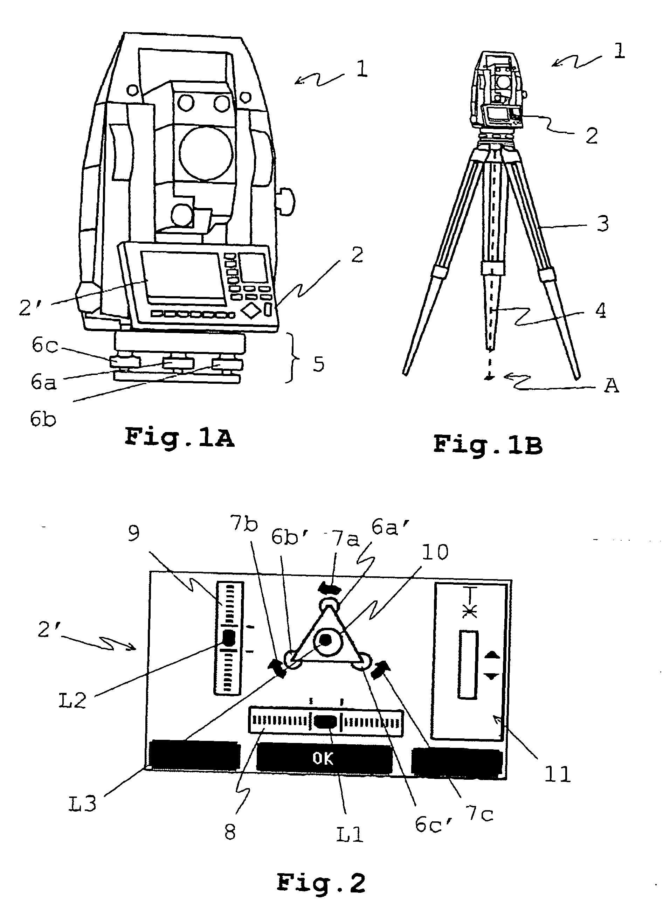

In Figur 1A ist als erfindungsgemässes Messgerät ein erfindungsgemäss ausgebildetes/ausgerüstetes Tachymeter 1 dargestellt. Das Instrument ist mit einem als Dreifuss ausgebildeten Unterteil 5 mit drei jeweils in einem Winkel von 120° zueinander stehenden Fussschrauben 6a,6b,6c ausgebildet. Mittels der Fussschrauben 6a,6b,6c ist das Tachymeter 1 höhenverstellbar und so horizontierbar. Tachymeter sind Instrumente zur Messung von Entfernungen und Winkeln zu Zielen. Vor einer Messung wird das Instrument aufgestellt, zentriert und horizontiert. Als Messmittel zum Feststellen der horizontalen Ausrichtung/von Neigungen ist im Tachymeter 1 ein - in der Figur nicht gezeigter - Zweiachs-Ölkompensator angeordnet. Weicht das Gerät bei der Ausführung von Messungen etwas aus der exakten horizontalen Lage ab, so korrigiert der Neigungskompensator automatisch die Messwerte bezüglich der Abweichungen der instrumentellen Horizontal- oder Vertikalachsen - beispielsweise wird eine gemessene schräge Strecke auf die Horizontale reduziert.
Die Kompensator-Messungen sind auf einer Anzeige 2' eines graphischen Displays 2 des Geräts wiedergegeben, dazu sind Verstell-Anweisungen angezeigt, welche aus den Kompensator-Angaben von einem -in der Figur nicht dargestellten - Mikroprozessor im Gerät generiert sind. Die Verstell-Anweisungen beziehen sich hier auf die Drehrichtung der Schrauben. So kann auch ein ungeübter Anwender durch Drehung der drei Fussschrauben 6a,6b,6c den Anweisungen entsprechend das Tachymeter 1 einfach horizontieren.

In Figur 1B ist das Tachymeter 1 aus Figur 1A auf einem Stativ 3 angebracht. Das Stativ 3 ist über einem Aufstellpunkt A positioniert. Erfindungsgemäss ist dem Tachymeter 1 eine ATR-Funktion (automatic target recognition) zum Zentrieren desselben über dem Aufstellpunkt A zugeordnet. In der Figur ist der Laserstrahl 4 dargestellt, mittels welchem automatisch der Aufstellpunkt A als Ziel gesucht und erkannt wird. Um als Ziel erkennbar zu sein, ist am Aufstellpunkt A eine Reflexfolie angebracht.

In Figur 2 ist die Anzeige 2' aus Figur 1A dargestellt. Die Kompensator-Messungen werden als Röhren- und Dosenlibellen-Anzeigen 8,9,10 auf der Anzeige 2' des Geräts nachgebildet. So ist dem Benutzer auch die aktuelle Ausrichtungs-Information in Form der Stellung der jeweiligen Libellenblase L1, L2, L3 zugänglich. Die drei Fussschrauben 6a, 6b. 6c aus Figur 1A als Justiermittel sind auf der Anzeige 2' als Kreise 6a',6b',6c' nachgebildet Den Fussschrauben 6a,6b,6c bzw. den Kreisen 6a',6b',6c' sind jeweils Verstell-Anweisungen als Pfeile 7a,7b,7c zugeordnet. So erkennt der Benutzer sofort, welche Schraube wie zu drehen ist.
Auf der Anzeige 2' sind weitere Anzeigeelemente oder Tasten, z.B. Funktionstasten, vorsehbar. In der gezeigten Ausführungsform ist eine Vielzahl von Funktionstasten auf dem graphischen Display 2 aus Figur 1 angeordnet, beispielsweise zum Auslösen der Entfernungsmessung, usw. In Figur 2 ist noch ein Laser-Anzeigeelement 11 dargestellt, welches die Intensität des Laserlots anzeigt.

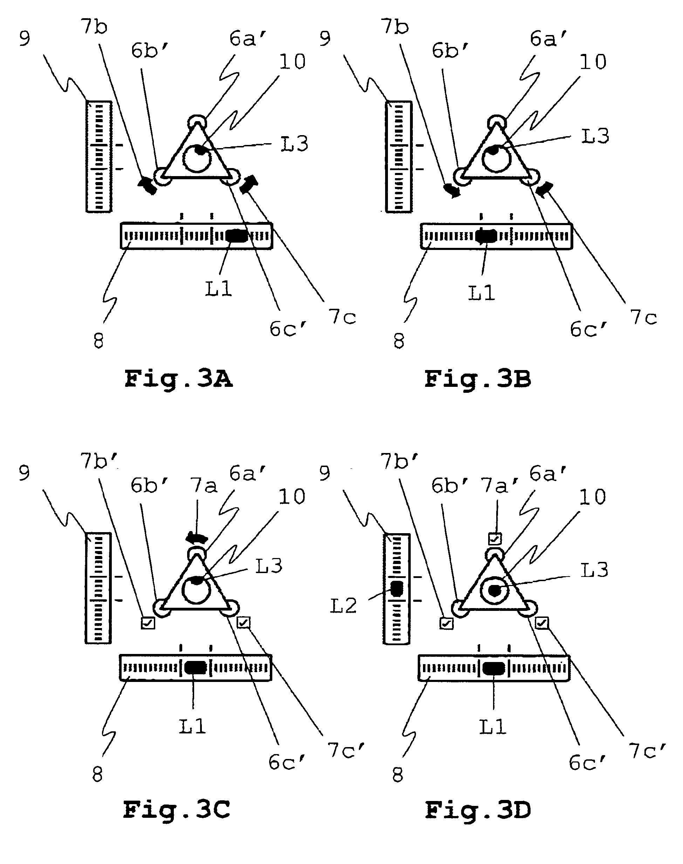

Die Figuren 3A-3D veranschaulichen den Horizontier-vorgang und werden im Folgenden zusammenhängend beschrieben.
In Figur 3A ist - wie aus der Nachbildung der Fussschrauben als Kreise 6a',6b',6c' zu erkennen - das Messgerät so gedreht, dass die Libellen-Anzeige 8 parallel zu zwei Schrauben (Fussschrauben 6b, 6c aus Fi.g. 1A) steht. Das Instrument ist nicht horizontiert - die Libellenblase L1 steht zu weit rechts, daher sind für die beiden Kreise 6b',6c' Verseell-Anweisurigen als Pfeile 7b, 7c angegeben. Der Benutzer dreht nun die Schrauben den Verstell-Anweisungen entsprechend.
Nach der Drehung ist die Libellenblase L1 in die gegenläufige Richtung gewandert - sie steht nun etwas zu weit links, die entsprechende Instrumentenachse ist also immer noch nicht parallel zur Libellen-Anzeige 8 ausgerichtet. Wieder zeigen die Pfeile 7b, 7c die Verstellrichtung (Drehrichtung) der schrauben an.
In Fig. 3C ist die Libellenblase L1 in die Mitte der nachgebildeten Röhre eingespielt. Die erste Instrumentenachse durch die Kreise 6b',6c' ist also korrekt horizontiert. Dies wird durch OK-Zeichen 7b',7c' angezeigt.

Die zur ersten Instrumentenachse vertikale zweite Instrumentenachse muss noch eingestellt werden, wie durch den Pfeil 7a dargestellt. Dazu wird das Gerät im Allgemeinen um 90° gedreht und der Verstell-Vorgang der dritten Schraube durchgeführt, bis die Libellenblase L2 in der Mitte einspielt.
Figur 3D zeigt ein korrekt horizontiertes Messgerät. Für alle drei die Schrauben nachbildenden Kreise 6a',6b',6c' ist ein OK-Zeichen 7a',7b',7c' gegeben, alle drei Libellenblasen L1,L2,L3 sind in die Mitte der jeweiligen nachgebildeten Libellen-Anzeigen 8,9,10 eingespielt. Damit ist auch das OK für das Auslösen einer Messung gegeben.

## Patentansprüche

1. Verfahren zur Horizontierung eines, insbesondere geodätischen, Messgeräts, welchem Messgerät
o wenigstens ein Messmittel zum Feststellen der horizontalen Ausrichtung des Messgeräts,
o wenigstens ein, insbesondere drei, verstellbares Justiermittel zur Höhenverstellung des Messgeräts und
o eine Datenverarbeitungseinrichtung zur Verarbeitung über das Messmittel verfügbarer Ausrichtungs-Werte in Verstell-Anweisungen der Justiermittcl
zugeordnet sind,
mit den Schritten
o Feststellen von, insbesondere zwei, horizontalen Ausrichtungs-Werten des Messgeräts mittels des wenigstens einen Messmittels,
o Übermitteln der Ausrichtungs-Werte an die Datenverarbeitungseinrichtung und
o Verarbeiten der Ausrichtungs-werte in Verstell-Anweisungen, wie Verstellrichtung und -grösse, des wenigstens einen Justiermittels.

2. Verfahren nach Anspruch 1, wobei dem Messgerät Wiedergabemittel zur Wiedergabe der Verstell-Anweisungen zugeordnet sind, mit einem weiteren Schritt o Wiedergeben, insbesondere graphisch oder akustisch, der Verstell-Anweisungen mittels der Wiedergabemittel.

3. Verfahren nach Anspruch 1 oder 2 mit einem weiteren Schritt
o Automatisches Verstellen des wenigstens einen Justiermittels entsprechend den Verstell-Anweisungen.

4. Verfahren nach einem der Ansprüche 1 bis 3 mit einem weiteren Schritt
o Darstellen, insbesondere graphisch, der Ausrichtungs-werte.

5. Messgerät, insbesondere geodätisches Messgerät, mit
o wenigstens einem Messmittel zum Feststellen der horizontalen Ausrichtung des Messgeräts,
o wenigstens einem, insbesondere drei, verstellbaren Justiermittel zur Höhenverstellung des Messgeräts, und
o einer Datenverarbeitungseinrichtung,
**dadurch gekennzeichnet, dass**
das wenigstens eine Messmittel, das wenigstens eine Justiermittel und die Datenverarbeitungseinrichtung so ausgebildet sind, dass über das Messmittel verfügbare Ausrichtungs-Werte an die Datenverarbeitungseinrichtung übermittelbar und mittels dieser in Verstell-Anweisungen, insbesondere Verstellrichtung und -grösse, des Justiermittels verarbeitbar sind.

6. Messgerät nach Anspruch S, **dadurch gekennzeichnet, dass** dem Messgerät Wiedergabemittel zur, insbesondere graphischen oder akustischen, Wiedergabe der Verstell-Anweisungen zugeordnet sind.

7. Messgerät nach Anspruch 6, **dadurch gekennzeichnet, dass** die Wiedergabemittel als Darstellungsmittel
Pfeile (7a,7b,7c) umfassen, welche Pfeile (7a,7b,7c) eine Verstellrichtung und gegebenenfalls Verstellgrösse angeben und insbesondere auf einer Anzeige (2') des Messgeräts dargestellt sind.

8. Messgerät nach einem der Ansprüche 5 bis 7, **dadurch gekennzeichnet, dass** die Messmittel
- eine Dosenlibelle und/oder
- wenigstens eine Röhrenlibelle und/oder
- einen Neigungskompensator, insbesondere einen Zweiachs-Flüssigkeits-Kompensator,
umfassen.

9. Messgerät nach einem der Ansprüche 5 bis 8, **dadurch gekennzeichnet, dass** das wenigstens eine, insbesondere drei, Justiermittel als Stellschraube, wie Fussschraube (6a,6b,6c), ausgebildet ist.

10. Messgerät nach einem der Ansprüche 5 bis 9, **dadurch gekennzeichnet, dass** das wenigstens eine Justiermittel so ausgebildet ist, dass es entsprechend den Verstell-Anweisungen automatisch verstellbar ist.

11. Messgerät nach einem der Ansprüche 5 bis 10, **dadurch gekennzeichnet, dass** weiters eine automatische Zielerkennungs-Funktion zur Zentrierung über einem Aufstellpunkt (A) vorgesehen ist.

12. Messgerät nach einem der Ansprüche 5 bis 11, **dadurch gekennzeichnet, dass** das Messgerät als
- Theodolit oder
- Tachymeter (1) oder
- Nivellier oder
- Rotationslaser
ausgebildet ist.

13. Computerprogrammprodukt für ein Verfahren nach einem der Ansprüche 1 bis 4.
